# EUROPÄISCHE PATENTSCHRIFT

(11) **EP 0 734 518 B1**
(45) Veröffentlichungstag und Bekanntmachung des Hinweises auf die Patenterteilung: **02.09.1998**
(21) Anmeldenummer: 95902741.8
(22) Anmeldetag: 07.12.1994
(51) Int. Cl.: G01N 21/17, G01B 11/06

(54) **VORRICHTUNG ZUM PHOTOTHERMISCHEN PRÜFEN EINER OBERFLÄCHE**
SURFACE PHOTOTHERMIC TESTING DEVICE
DISPOSITIF DE CONTROLE PHOTOTHERMIQUE DE SURFACE

(30) Priorität: 16.12.1993 DE 4343076
(43) Veröffentlichungstag der Anmeldung: 02.10.1996
(73) Patentinhaber: PHOTOTHERM Dr. PETRY GmbH, 66115 Saarbrücken (DE)
(72) Erfinder: PETRY, Harald, D-66130 Saarbrücken (DE); PREKEL, Helmut, D-66111 Saarbrücken (DE)
(74) Vertreter: RACKETTE Partnerschaft Patentanwälte
(86) Internationale Anmeldenummer: DE9401448
(87) Internationale Veröffentlichungsnummer: WO9516907

(56) Entgegenhaltungen:
- EP-A- 0 279 347
- DE-A- 3 939 877

## Beschreibung

Die Erfindung betrifft eine Vorrichtung zum photothermischen Prüfen einer Oberfläche eines insbesondere bewegten Prüfkörpers mit einer Beleuchtungsvorrichtung, mit der eine intensitätsmodulierte Anregungsstrahlung erzeugbar ist, mit einer optischen Einrichtung, mit der die Oberfläche mit der Anregungsstrahlung in einem Prüfbereich beaufschlagbar ist und mit der von einem Meßbereich der Oberfläche abgegebene Wärmestrahlung einem Detektor in einem gegenüber dem direkten Gesichtsfeld des Detektors vergrößerten Winkelbereich zuführbar ist, wobei die optische Einrichtung eine Reflexionsvorrichtung mit einer Reflexionsfläche, mit der die Anregungsstrahlung und die dem Detektor zugeführte Wärmestrahlung koaxial ausrichtbar sind, eine nur von der Anregungsstrahlung beaufschlagte Fokussiervorrichtung und eine zwischen der Oberfläche und dem Detektor angeordnete Abbildungsvorrichtung zum Sammeln der Wärmestrahlung aus dem im Fokalbereich der Abbildungsvorrichtung liegenden Meßbereich der Oberfläche aufweist und die Reflexionsfläche der Reflexionsvorrichtung für eine der Strahlungen über eine optimierte Reflektivität verfügt.

Eine derartige Vorrichtung ist aus der DE 39 39 877 A1 bekannt. Bei dieser Vorrichtung ist eine in einer Beleuchtungsvorrichtung erzeugte intensitätsmodulierte Anregungsstrahlung in Form einer Heizstrahlung über eine Fokussiervorrichtung einer Reflexionsvorrichtung zugeführt, mit der die Anregungsstrahlung auf eine Oberfläche eines Prüfkörpers lenkbar ist. Die Reflexionsvorrichtung ist weiterhin von einer von einem Meßbereich der Oberfläche des Prüfkörpers entgegen der Einfallsrichtung der Anregungsstrahlung rückgeworfenen Wärmestrahlung durchsetzt, die auf eine Detektor gelenkt ist.

Die Reflexionsvorrichtung verfügt über eine Reflexionsfläche, die auf die Wellenlängen der Anregungsstrahlung und der Wärmestrahlung zum Erzielen einer hohen Signalausbeute angepaßt ist. In einer Ausgestaltung ist die Reflexionsfläche beispielsweise auf die nahezu vollständige Reflexion der Anregungsstrahlung optimiert. Diese Ausgestaltung eignet sich insbesondere bei Verwendung von zwei möglichst unterschiedlichen Wellenlängen für die Anregungsstrahlung und die Wärmestrahlung, um durch Auslegung der Eigenschaften der Reflexionsfläche zum einen eine hohe Reflektivität für die Anregungsstrahlung und andererseits eine hohe Transmittivität für die Wärmestrahlung und damit eine hohe Signalausbeute zu erreichen. Bei spektral eng benachbarten Strahlungen jedoch ergibt sich ein unerwünscht hoher Verlust für die beiden Strahlungsanteile, da nicht unwesentliche Anteile der Anregungsstrahlung transmittiert und der Wärmestrahlung reflektiert werden.

Eine weitere Vorrichtung zum photothermischen Prüfen einer Oberfläche ist aus der DE 39 13 474 A1 bekannt. Bei dieser Vorrichtung ist mit einem als Beleuchtungsvorrichtung vorgesehenen Neodym/YAG-Laser eine intensitätsmodulierte Anregungsstrahlung in einem Parallelstrahl über eine einen ersten und zweiten Umlenkspiegel und eine Abbildungslinse aufweisende optische Einrichtung in einem Prüfbereich auf eine Oberfläche eines Prüfkörpers fokussierbar. Der erste Umlenkspiegel lenkt die aus dem Neodym/YAG-Laser austretende Anregungsstrahlung auf den zweiten Umlenkspiegel. Von der Oberfläche des Prüfkörpers abgegebene, im Vergleich zu der Anregungsstrahlung langwelligere Wärmestrahlung im infraroten Spektralbereich zwischen etwa 2 Mikrometer und 5 Mikrometer ist aus einem Meßbereich mit der Abbildungslinse als Parallelstrahl in die optische Einrichtung einkoppelbar. Der durch die Abbildungslinse durchtretende Anteil der Wärmestrahlung ist über den sowohl für die Anregungsstrahlung als auch die Wärmestrahlung reflektiven zweiten Umlenkspiegel umlenkbar, durchtritt den für den Spektralbereich der Wärmestrahlung teildurchlässigen ersten Umlenkspiegel und beaufschlagt einen für den Spektralbereich der Wärmestrahlung optimierten dritten Umlenkspiegel der optischen Einrichtung. Der von dem dritten Umlenkspiegel umgelenkte Teil der Wärmestrahlung beaufschlagt über eine fokussierende Detektorlinse einen Detektor.

Bei der letztgenannten Vorrichtung ist der zweite Umlenkspiegel beweglich als Scanner ausgestaltet, so daß die Anregungsstrahlung über eine vorbestimmte Meßbahn, beispielsweise mäanderförmig, über die Oberfläche führbar ist. Durch die koaxiale Ausrichtung der von der Abbildungslinse transmittierten Wärmestrahlung in Bezug auf die Anregungsstrahlung stimmt der Meßbereich im wesentlichen mit dem Prüfbereich überein. Die sowohl von der Anregungsstrahlung als auch von der Wärmestrahlung durchsetzten Abbildungslinse ist sowohl für die Anregungsstrahlung als auch die Wärmestrahlung transmittiv und weist vorzugsweise auf der zu der Oberfläche weisenden Linsenfläche eine Beschichtung auf, die als Fenster für einen Spektralbereich von etwa 2 Mikrometer bis 5 Mikrometer wirkt, für die rückgeworfene Anregungsstrahlung mit einer Wellenlänge von etwa 1 Mikrometer jedoch nicht transmittiv ist. Der erste Umlenkspiegel ist für den Spektralbereich der Anregungsstrahlung möglichst reflektiv und für den Spektralbereich der Wärmestrahlung möglichst transmittiv ausgestaltet.

Bei der letztgenannten Vorrichtung ist zwar durch die Ausgestaltung der Abbildungslinse als Doppeloptik für die Anregungsstrahlung und die Wärmestrahlung ein großer Anteil der von der Oberfläche rückgeworfenen Wärmestrahlung erfaßbar, allerdings ist der Fertigungsaufwand für eine derartige als Doppeloptik ausgestaltete Abbildungslinse verhältnismäßig hoch. Weiterhin führt die Ausgestaltung des ersten Umlenkspiegels als halbdurchlässiger dielektrischer beziehungsweise dichroitischer Spiegel sowohl bei der Intensität der Anregungsstrahlung als auch bei der Intensität der Wärmestrahlung zu unvermeidlichen Verlusten, die insbesondere bei eng benachbarten Spektralbereichen mit verhältnismäßig hohen Verlusten bei Teilreflexion und Teiltransmission ein Prüfen bei einer verhältnismäßig geringen Ausgangsleistung der Beleuchtungsvorrichtung bezüglich der Signal intensität nachteilig ist.

Aus der EP 0 279 347 A2 ist eine Vorrichtung zum Messen der Verschiebung eines Objektes bekannt, bei der ein paralleler Meßstrahl über einen auf der Achse einer Abbildungslinse angeordneten Umlenkspiegel auf einen Prüfkörper ausrichtbar ist. Die Abbildungslinse weist eine zentrische Ausnehmung auf, durch die der von dem Umlenkspiegel abgelenkte parallele Meßstrahl auf den Prüfkörper fallend durchtritt. Die Abbildungslinse ist mit einer im achsennahen Bereich sowie in Randbereichen ausgesparten Abdeckvorrichtung versehen, wobei das durch die Randbereiche der Abbildungslinse transmittierte, von dem Prüfkörper rückgeworfene Licht auf einen Flächendetektor fällt. Durch die Auswertung des Ausgangssignales des Flächendetektors ist die Verschiebung des Prüfkörpers bestimmbar.

Die DE 40 03 407 A1 lehrt eine Vorrichtung, bei der eine von einem Laser erzeugte intensitätsmodulierte Anregungsstrahlung einem Ende eines Lichtleitfaserbündels eingespeist ist. An dem dem Prüfkörper zugewandten anderen Ende des Lichtleitfaserbündels ist ein Querschnittswandler vorgesehen, mit dem die austretende Anregungsstrahlung mittels einer Zylinderlinse durch einen gekippten angeordneten halbdurchlässigen Spiegel auf die Oberfläche projizierbar ist. Der halbdurchlässige Spiegel lenkt einen Teil der abgegebenen Wärmestrahlung auf einen Detektor.

Diese Vorrichtung weist zwar durch den Querschnittswandler und die Zylinderlinse eine einfache Anpassung des Prüfbereiches an verschiedene Meßbedingungen auf, jedoch ergibt sich durch die Verwendung des halbdurchlässigen Spiegels zur Trennung der Anregungsstrahlung und der Wärmestrahlung ein unzweckmäßig hoher Verlust an wenigstens einer der beiden Strahlungen.

Aus der DE 35 04 237 C2 ist ein Atomfluoreszenz-Spektrometer bekannt, bei dem ein paralleler Anregungsstrahl aus einem frequenzverdoppelten Farbstofflaser im ultravioletten Spektralbereich durch eine Ausnehmung eines Beobachtungsspiegels in eine Probenküvette einstrahlbar ist. Die von der Anregungsstrahlung induzierte Fluoreszenzstrahlung von in der Küvette zu untersuchenden Atomen wird entgegengesetzt zu der Einfallsrichtung der Anregungsstrahlung von dem Beobachtungsspiegel umgelenkt und von einer Beobachtungslinse in eine Detektionsvorrichtung eingekoppelt.

Bei dieser Vorrichtung ist zwar durch die Ausgestaltung der Probenküvette als ein Rohr und das Umlenken der in Längsrichtung austretenden Fluoreszenzstrahlung durch den Beobachtungsspiegel eine hohe Nachweisempfindlichkeit erreicht, allerdings ist es mit einer Vorrichtung dieser Art nicht möglich, ortsaufgelöste Messungen vorzunehmen, da sowohl bei der Anregung als auch der Beobachtung der Fluoreszenzstrahlung über ein verhältnismäßig großes Meßvolumen gemittelt wird.

Aus der EP 0 105 078 A1 ist eine Vorrichtung zum photothermischen Prüfen einer Oberfläche mit einem Prüfkopf bekannt, dem über eine Faseroptik Anregungsstrahlung zuführbar ist und aus dem mit einer anderen Faseroptik die von der Oberfläche abgegebene Wärmestrahlung einem Detektor zuführbar ist. Die von den Faseroptiken geführten Strahlungen sind über Linsen ein- und auskoppelbar, wobei der Prüfkopf einen dichroitischen Spiegel zum Überlagern und Separieren der Anregungsstrahlung und Wärmestrahlung aufweist. Eine von der Anregungsstrahlung beaufschlagte Abbildungslinse dient dem Fokussieren der Anregungsstrahlung auf die Oberfläche sowie dem Sammeln der von der Oberfläche abgegebenen Wärmestrahlung.

Bei dieser Vorrichtung ist zwar durch das Vorsehen der Faseroptiken zum Führen der Strahlungen eine Bewegung des Prüfkopfes über die Oberfläche für ortsaufgelöste Messungen verhältnismäßig einfach, allerdings ergeben sich bedingt durch die Ein- und Auskoppelverluste sowie durch das Vorsehen des dichroitischen Spiegels nachteilig hohe Verluste an ausnutzbarer Strahlung.

Aus der DE 34 39 287 A1 ist eine Vorrichtung mit optisch induzierter Erzeugung von nachzuweisenden Teilchen bekannt, bei der die aus einem Laser stammende Anregungsstrahlung über einen mit einer zentrischen Ausnehmung versehenen Umlenkspiegel auf eine Abbildungslinse umlenkbar ist, die die Anregungsstrahlung auf eine Oberfläche einer zu untersuchenden Probe fokussiert. Die Abbildungslinse weist ebenfalls eine zentrische Ausnehmung auf, so daß von der Anregungsstrahlung erzeugte Teilchen wie Elektronen oder Ionen entgegen der Einstrahlungsrichtung der Anregungsstrahlung durch die Ausnehmungen der Abbildungslinse und des Umlenkspiegels hindurch eine Analysiervorrichtung beaufschlagen können. Um die Teilchen aus einem verhältnismäßig großen Raumwinkelbereich analysieren zu können, sind die Ausnehmungen des Umlenkspiegels und der Abbildungslinse im Verhältnis zu deren Durchmesser relativ groß zu wählen. Dadurch jedoch ist es nachteilig, daß die Anregungsstrahlung ein gaußförmiges Strahlprofil aufweist. Zweckmäßiger ist ein Strahlprofil mit einer Doppelhöckerstruktur vorgesehen, bei der das zentrische Minimum mit der Lage der Ausnehmungen zusammenfällt, so daß der Intensitätsverlust der Anregungsstrahlung gegenüber einem gaußförmigen Strahlquerschnitt herabgesetzt ist.

Bei dieser Vorrichtung ist zwar durch die Wahl eines Strahlquerschnittes mit Doppelhöckerstruktur der nachteilige Einfluß der zentrischen Ausnehmungen des Umlenkspiegels und der Abbildungslinse vermindert, allerdings ergibt sich dadurch eine ungleichmäßige Ausleuchtung des Prüfbereiches.

Ausgehend von dem oben genannten Stand der Technik liegt der Erfindung die Aufgabe zugrunde, eine Vorrichtung der eingangs genannten Art zu schaffen, die sich bei verschiedenen, insbesondere spektral eng benachbarten Frequenzbereichen der Anregungsstrahlung und der abgegebenen Wärmestrahlung neben einer gleichmäßigen Ausleuchtung des Prüfbereiches durch einen hohen Gesamtwirkungsgrad auszeichnet.

Diese Aufgabe wird erfindungsgemäß dadurch gelöst, daß die Reflexionsfläche der Reflexionsvorrichtung von der anderen Strahlung in einem für diese andere Strahlung im wesentlichen vollständig durchlässigen Bereich nahezu verlustfrei passiert wird, daß die Abbildungsvorrichtung eine Ausnehmung aufweist, durch die die homozentrische Anregungsstrahlung durchtritt, und daß der Fokalbereich der Fokussiervorrichtung zwischen der Oberfläche und der Fokussiervorrichtung liegt, so daß die Anregungsstrahlung divergent auf die Oberfläche auftrifft und der Prüfbereich größer als der Meßbereich der Oberfläche ist.

Dadurch, daß die Fokussiervorrichtung, die Reflexionsvorrichtung und die Abbildungsvorrichtung nur von jeweils einer der Strahlungen zum Erzeugen eines Meßsignales beaufschlagt sind, ist jede dieser optischen Bauelemente für eben diese eine Strahlung bezüglich der Reflektivität beziehungsweise Transmitivitäten optimal auslegbar, ohne Kompromisse wie beispielsweise bei halbdurchlässigen Spiegeln zur Überlagerung der Anregungsstrahlung und der Wärmestrahlung eingehen zu müssen. Dadurch, daß der Fokalbereich der Fokussiervorrichtung zwischen der Oberfläche und der Fokussiervorrichtung liegt, ist neben einer durch die Anordnung der vorgenannten optischen Bauelemente erzielten Homogenität der Bestrahlung des Prüfbereiches der Prüfbereich selbst im Vergleich zu dem Meßbereich verhältnismäßig groß, so daß eine insbesondere bei bewegten Prüfkörpern zweckmäßige großflächige Beaufschlagung des Prüfbereiches mit der Anregungsstrahlung erzielt ist. Durch den großflächigen bestrahlten Prüfbereich sind beispielsweise auch bei hohen Bewegungsgeschwindigkeiten des Prüfkörpers durch die Vorbestrahlung des späteren Meßbereiches auch bei wenigen Prüfpulsen der Anregungsstrahlung aussagekräftige Ergebnisse erreichbar. Durch die Entkopplung des Anregungsstrahles und der rückgeworfenen erfaßten Wärmestrahlung ist es ohne großen Aufwand möglich, entweder die Wellenlänge der Anregungsstrahlung oder den Wellenlängenbereich der erfaßten Wärmestrahlung zu ändern, da jeweils nur ein Satz optischer Komponenten auszutauschen ist.

Es ist zweckmäßig, die Fokussiervorrichtung so anzuordnen, daß ihr Fokalbereich in einem Bereich zwischen der Reflexionsvorrichtung und der Abbildungsvorrichtung und dabei in besonders vorteilhafter Weise im wesentlichen mittig liegt. Dadurch ist einerseits die in der Abbildungsvorrichtung eingebrachte Ausnehmung sehr klein und damit der durch die Abbildungsvorrichtung erfaßte Anteil an Wärmestrahlung durch die Ausnehmung nur geringfügig verringert, andererseits ist die Abschattung durch den für die Wärmestrahlung nicht reflektiven Teil der Reflexionsfläche mit entsprechenden Verlusten minimiert.

In einem Ausführungsbeispiel der Erfindung ist die Reflexionsvorrichtung ein kleiner Einkoppelspiegel, dessen Abmessungen im wesentlichen der Größe der Ausnehmung in der Abbildungsvorrichtung entsprechen. Der Einkoppelspiegel ist durch die Anregungsstrahlung beaufschlagt und für die Wellenlänge der Anregungsstrahlung im wesentlichen vollständig reflektiv. Der Einkoppelspiegel ist auf der optischen Achse der Abbildungsvorrichtung angeordnet, so daß die durch die Ausnehmung in der Abbildungsvorrichtung und die Reflexionsfläche des Einkoppelspiegels gebildeten Abschattungsbereiche für die Wärmestrahlung im wesentlichen zusammenfallen.

Die Wärmestrahlung ist über die Abbildungsvorrichtung und eine Detektorlinse direkt dem Detektor zuführbar.

In einem weiteren Ausführungsbeispiel ist die Kopplungsvorrichtung ein Auskoppelspiegel mit einer Ausnehmung, wobei die Ausnehmung des Auskoppelspiegels und die Ausnehmung der Abbildungsvorrichtung auf der optischen Achse der Abbildungsvorrichtung liegen und etwa gleich groß sind. Die Anregungsstrahlung tritt durch die Ausnehmung des Auskoppelspiegels. Die Abbildungsvorrichtung leuchtet den Auskoppelspiegel mit dem erfaßten Anteil der Wärmestrahlung aus dem Meßbereich im wesentlichen vollständig aus. Der Auskoppelspiegel ist so einjustiert, daß die ihn beaufschlagende Wärmestrahlung über eine Detektorlinse den Detektor beaufschlagt. Die Reflexionseigenschaften des Auskoppelspiegels sind dem Frequenzbereich der zu nutzenden Wärmestrahlung bezüglich einer im wesentlichen vollständigen Reflexion angepaßt, so daß im wesentlichen der gesamte ausnutzbare Anteil der von der Abbildungsvorrichtung erfaßten Wärmestrahlung dem Detektor zuführbar ist.

Weitere Ausgestaltungen und Vorteile der Erfindung ergeben sich aus den Unteransprüchen und der nachfolgenden Figurenbeschreibung. Es zeigt:
- Fig. 1: eine Vorrichtung zum photothermischen Prüfen einer Oberfläche in einer schematischen Darstellung, bei der ein Anregungsstrahl mit einem Einkoppelspiegel koaxial mit einem Signalstrahl überlagert ist, und
- Fig. 2: eine weitere Vorrichtung zum photothermischen Prüfen einer Oberfläche in einer schematischen Darstellung, bei der mit einem Auskoppelspiegel der signalstrahl von dem Anregungsstrahl trennbar ist.

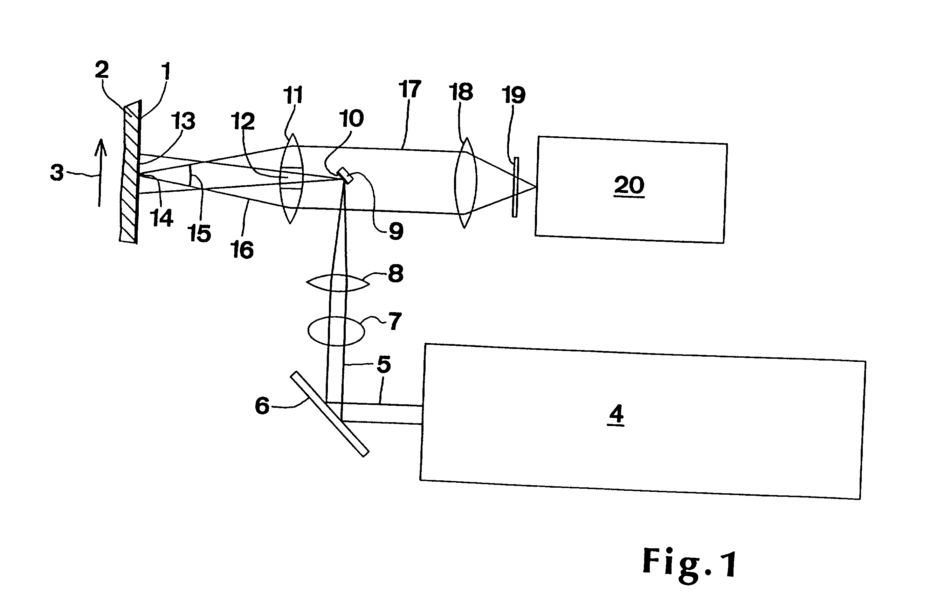

Fig. 1 zeigt in einer schematischen Darstellung eine Vorrichtung zum photothermischen Prüfen einer Oberfläche 1 eines bewegten Prüfkörpers 2. Der Prüfkörper 2 weist an der Oberfläche 1 beispielsweise eine Lackschicht mit einer Solldicke von etwa 100 Mikrometer auf, wobei deren tatsächliche Dicke vor weiteren Verarbeitungsschritten in einer Fertigungsstraße, in welcher der Prüfkörper 2 in einer beispielsweise durch den Pfeil 3 gekennzeichneten Richtung mit einer Geschwindigkeit von etwa 2 Metern pro Sekunde bewegt wird, zu bestimmen ist.

Ein Anregungslaser 4, beispielsweise ein CO₂-Laser, emittiert im infraroten Spektralbereich bei etwa 10 Mikrometer einen intensitätsmodulierten Anregungsstrahl 5. Der Anregungsstrahl 5 ist mit einem Umlenkspiegel 6 um 90 Grad umlenkbar und durchtritt einen in Bezug auf die Richtung des Anregungsstrahles 5 geneigt angeordneten Kontrollspiegel 7, über den mit einem in Fig. 1 nicht dargestellten Kontrollaser sichtbares Licht koaxial in den Anregungsstrahl 5 einkoppelbar ist, so daß das für das menschliche Auge nicht sichtbare infrarote Licht des Anregungsstrahles 5 mit sichtbarem Licht zum Erhöhen der Betriebssicherheit überlagert ist. Der Kontrollspiegel 7 transmittiert die im wesentlichen gesamte Intensität des Anregungsstrahles 5, wobei die Intensität des Kontrollasers so gewählt ist, daß sie nicht merklich zu dem Meßsignal beiträgt.

Nach Durchtritt durch den Kontrollspiegel 7 durchläuft der Anregungsstrahl 5 eine Anregungsfokussierlinse 8, in deren Fokalbereich ein Einkoppelspiegel 9 vorgesehen ist. Eine Reflexionsfläche 10 des Einkoppelspiegels 9 ist mit einer für die Wellenlänge des Anregungsstrahles 5 im wesentlichen vollständig reflektiven Beschichtung versehen. Der Abstand zwischen der Anregungsfokussierlinse 8 und dem Einkoppelspiegel 9 ist so gewählt, daß der Bereich des engsten Strahlquerschnittes des Anregungsstrahles 5 vorzugsweise einige Millimeter in Strahlrichtung hinter der Reflexionsfläche 10 liegt, um eine die Beschichtung der Reflexionsfläche 10 möglicherweise beschädigende direkte Fokussierung auf den Einkoppelspiegel 9 zu vermeiden.

Mit dem Einkoppelspiegel 9 ist der Anregungsstrahl 5 durch eine in einer Sammellinse 11 eingebrachte, zentrische Ausnehmung 12 durchführbar, so daß der in diesem Bereich divergente Anregungsstrahl 5 in einem Prüfbereich 13 die Oberfläche 1 des Prüfkörpers 2 gleichmäßig ausleuchtet. Die Größe der in Fig. 1 der besseren Übersichtlichkeit wegen nicht maßstäblich dargestellten Ausnehmung 12 ist so gewählt, daß etwa 98 Prozent der Intensität des Anregungsstrahles 5 bezogen auf die von dem Einkoppelspiegel 9 reflektierte Intensität die Oberfläche 1 in dem Prüfbereich 13 beaufschlagen. Die divergente Strahlführung des Ausgangsstrahls 5 nach Durchtritt durch die Sammellinse 11 ist ein wesentlicher Beitrag zum Laserschutz.

In einer Ausführungsvariante ist die Ausnehmung 12 der Sammellinse 11 mit einem für den Frequenzbereich des Anregungsstrahles 5 im wesentlichen vollständig durchlässigen Schutzverschluß versehen, um bei einem Einsatz der Vorrichtung in beispielsweise durch Flugstaub verschmutzten Umgebungen einen schädlichen Staubeintritt durch die Ausnehmung 12 in die üblicherweise durch ein Gehäuse geschützte Vorrichtung zu unterbinden.

Die Intensität des Anregungsstrahles 5 ist in diesem Ausführungsbeispiel mit einer Frequenz von wenigen 100 Hertz mit einem Tastverhältnis von etwa 1:1 durchmoduliert. Durch Wechselwirkung mit der Oberfläche 1 des Prüfkörpers 2 wird ein Teil der eingestrahlten Energie des Anregungsstrahles 5 als Wärmestrahlung aus dem Prüfbereich 13 reemittiert. In Abhängigkeit der Schichtdicke sowie der Materialeigenschaften im Oberflächenbereich ergibt sich ein charakteristischer zeitlicher Verlauf der Reemission.

Der aus einem Meßbereich 14 zurückgeworfene Anteil der Wärmestrahlung ist in einem Raumwinkelbereich 15 durch die Sammellinse 11 erfaßbar, die für den auszuwertenden Spektralbereich der Wärmestrahlung auf maximale Transmission ausgelegt ist. Das Verhältnis der Größe des prüfbereiches 13 zu dem Meßbereich 14 ist so gewählt, daß bei einer gegebenen Geschwindigkeit des Prüfkörpers 2 bei etwa zehn Meßperioden die Meßbereiche 14 in den durch den ersten Impuls der Anregungsstrahlung 5 ausgeleuchteten Prüfbereich 13 fallen.

Die Sammellinse 11 ist mit einem im wesentlichen ihrer Brennweite entsprechenden Abstand von der Oberfläche 1 angeordnet, so daß ein aus dem Meßbereich 14 reemittierter, divergenter Signalstrahl 16 in einen Parallelstrahl 17 überführbar ist. Die Größe der Ausnehmung 12 der Sammellinse 11 und die Größe des einen Teil des Parallelstrahles 17 abschattenden Einkoppelspiegels 9 sind im wesentlichen gleich, um die Verluste in dem Signalstrahl 16 und dem Parallelstrahl 17 an ausnutzbarer Wärmestrahlung zu minimieren.

Der in dem Parallelstrahl 17 geführte Anteil der Wärmestrahlung ist mit einer Detektorlinse 18 über einen Filter 19 einem Detektor 20 zuführbar. Das Filter 19 hat einen von der Wellenlänge des Anregungsstrahles 5 verschiedenen Transmissionsbereich, der in diesem Ausführungsbeispiel bei etwa 2 Mikrometer bis 5 Mikrometer liegt. Mit dem Filter 19 ist somit die von der Oberfläche 1 rückreflektierte Intensität des Anregungsstrahles 5 von dem Detektor 20 abschirmbar.

Der Detektor 20 ist an eine in Fig. 1 nicht dargestellte Auswertelektronik angeschlossen, mit der der Anstieg der Intensität und die Phasenverschiebung der maximalen Intensität der Wärmestrahlung gegenüber den Impulsen des Anregungsstrahles 5 erfaßbar sind. Mit diesen Werten ist in an sich bekannter Weise beispielsweise die Schichtdicke in dem Oberflächenbereich der Oberfläche 1 bestimmbar. Durch die kollineare Anordnung des Anregungsstrahles 5 und des Signalstrahles 16 beziehungsweise des Parallelstrahles 17 ist gewährleistet, daß sich Änderungen in dem Abstand zwischen dem Prüfkörper 2 und beispielsweise der Sammellinse 11 nicht auf die Phasenverschiebung zwischen der maximalen Intensität der Wärmestrahlung und den Impulsen des Anregungsstrahles 5 niederschlagen.

In einer Variante zu dem in Fig. 1 dargestellten Ausführungsbeispiel weist der Einkoppelspiegel 9 einen sich über den gesamten Strahlquerschnitt des Parallelstrahles 17 erstreckenden Grundkörper auf, der für den auszunutzenden Spektralbereich der Wärmestrahlung im wesentlichen vollständig transmittiv ist. Die Reflexionsfläche 10 des Einkoppelspiegels 9 ist im Auftreffbereich des Anregungsstrahles 5 auf den Grundkörper vorgesehen. Diese Variante weist den Vorteil auf, daß den Grundkörper haltende, in Fig. 1 nicht dargestellte Befestigungsvorrichtungen außerhalb des Parallelstrahles 17 angeordnet werden können und dadurch keine zusätzliche Abschattung des Parallelstrahles 17 auftritt.

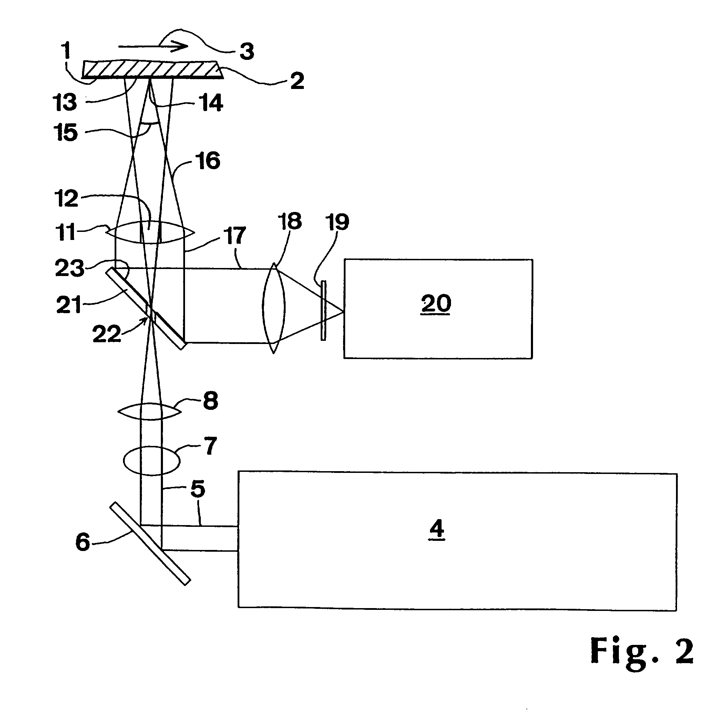

Fig. 2 zeigt in einer schematischen Darstellung ein bevorzugtes Ausführungsbeispiel einer Vorrichtung zum photothermischen Prüfen einer Oberfläche 1, wobei sich in Fig. 1 und in Fig. 2 entsprechende Positionen mit gleichen Bezugszeichen versehen sind. In Fig. 2 durchtritt der Anregungsstrahl 5 in seinem Fokalbereich einen Auskoppelspiegel 21 in einer Ausnehmung 22. Der Auskoppelspiegel 21 ist so angeordnet, daß der von der Sammellinse 11 erzeugte Parallelstrahl 17 im wesentlichen um 90 Grad auf die Detektorlinse 18 fallend umlenkbar ist. Diese Anordnung, bei der der Anregungsstrahl 5 nach Durchtritt durch die Anregungsfokussierlinse 8 direkt auf die Oberfläche 1 trifft, ist insbesondere dann zweckmäßig, wenn die Intensität des Anregungsstrahles 5 beispielsweise mehrere Watt beträgt, bei der eine Anordnung von Spiegeln in der Nähe eines Fokalbereiches zu Beschädigungen auf möglicherweise verschmutzten Reflexionsflächen führen könnte.

Weiterhin entfällt in der Anordnung gemäß Fig. 2 der in der Ausgestaltung gemäß Fig. 1 notwendige Einkoppelspiegel 9 mit der Reflexionsfläche 10. Bei einem Wechsel der Wellenlänge des Anregungsstrahls 5 sind daher nur der Umlenkspiegel 6, der Kontrollspiegel 7 und die Anregungsfokussierlinse 8 auszutauschen. Schließlich entfallen möglicherweise störende Halteelemente des Einkoppelspiegels 9.

Zum Minimieren der Verluste der in dem Raumwinkelbereich 15 erfaßten Wärmestrahlung ist es zweckmäßig, die Ausnehmung 12 der Sammellinse 11 und die Ausnehmung 22 des Auskoppelspiegels 21 im wesentlichen gleich groß auszuführen, so daß sich die jeweils abgeschatteten Bereiche des Signalstrahles 16 im wesentlichen entsprechen und der Gesamtverlust minimiert ist. Die Reflexionsfläche 23 des Auskoppelspiegels 21 ist für eine maximale Reflexion des auszunutzenden spektralen Anteiles der Wärmestrahlung ausgelegt, wobei durch die Anordnung des Auskoppelspiegels 21 im Unschärfebereich der Detektorlinse 18 die Signalausbeute weiter erhöht ist.

In einer Variante des in Fig. 2 dargestellten Ausführungsbeispieles weist der Auskoppelspiegel 21 einen durchgehenden Grundkörper auf, wobei die Reflexionsfläche 23 im Durchtrittsbereich des Anregungsstrahles 5 ausgespart ist. Der Grundkörper des Auskoppelspiegels 21 ist für den Anregungsstrahl 5 im wesentlichen vollständig transmittiv. Bei dieser Variante ist ein verhältnismäßig aufwendiges Einbringen einer Ausnehmung 22 in den Auskoppelspiegel 21 vermieden. Diese Variante ist bei einer den Grundkörper des Auskoppelspiegels 21 nicht beschädigenden Intensität des Fokalbereiches der Fokussierlinse 8 zweckmäßig.

In einer weiteren, nicht dargestellten Ausführungsform ist der Auskoppelspiegel 21 in Richtung der Strahlachse des Anregungsstrahles 5 verschiebbar, so daß die Ausnehmung 22 in dem Fokalbereich der Anregungsfokussierlinse 8 positionierbar ist, wobei die Detektorlinse 18 und der Detektor 20 nachführbar sind. Bei dieser Ausgestaltung ist die Größe der Ausnehmung 22 auf den Strahlquerschnitt des Anregungsstrahles 5 im Fokalbereich der Anregungsfokussierlinse 8 minimiert. Bei dieser Ausgestaltung ist der Auskoppelspiegel 21 verkippbar, so daß der Meßbereich 14 gegenüber dem Prüfbereich 13 exzentrisch angeordnet werden kann. Dadurch ist beispielsweise bei hohen Geschwindigkeiten des Prüfkörpers von bis zu 200 Meter pro Minute ein maximaler Vorlauf des prüfbereiches 13 in bezug auf den Meßbereich 14 einstellbar, um ein zur Gewinnung aussagekräftiger Meßergebnisse ausreichendes Erwärmen der Oberfläche 1 des Prüfkörpers 2 sicherzustellen. Durch das Verschieben des Auskoppelspiegels 21 ist weiterhin sichergestellt, daß sich die optischen Verhältnisse im Prüfbereich 13 und Meßbereich 14 im Gegensatz zu einer prinzipiell ebenfalls möglichen Justage der Anregungsfokussierlinse 8 nicht ändern.

Bei den in Fig. 1 und Fig. 2 dargestellten Ausführungsbeispielen ist die Anregungsfokussierlinse 8 eine Bikonkavlinse mit einer Brennweite von etwa 50 Millimeter. Die Ausnehmung 12 der Sammellinse 11 ist in diesen Ausführungsbeispielen im wesentlichen kreisförmig. Der Einkoppelspiegel 10 gemäß dem Ausführungsbeispiel der Fig. 1 ist ein Rundspiegel und die Ausnehmung 22 des Auskoppelspiegels 21 gemäß dem Ausführungsbeispiel der Fig. 2 eine kreisförmige Bohrung. Der Prüfbereich 13 ist kreisförmig, so daß eine Messung bei beliebigen Bewegungsrichtungen des Prüfkörpers 2 durchführbar ist.

Bei einem Einsatz der Vorrichtungen, bei dem sich der Prüfkörper 2 in nur einer einzigen, festgelegten Richtung bewegt, ist die Anregungsfokussierlinse 8 als eine Zylinderlinse vorgesehen. Die Ausnehmung 12 der Sammellinse 11 und die Ausnehmung 22 des Auskoppelspiegels 21 sowie der Einkoppelspiegel 9 sind dem länglichen Fokalbereich der zylindrischen Anregungsfokussierlinse 8 durch eine ebenfalls längliche Ausgestaltung angepaßt, so daß die im wesentlichen gesamte Intensität des Anregungsstrahles 5 auf die Oberfläche 1 des Prüfkörpers 2 in einem länglichen Prüfbereich 13 auftrifft.

## Patentansprüche

1. Vorrichtung zum photothermischen Prüfen einer Oberfläche (1) eines insbesondere bewegten Prüfkörpers (2) mit einer Beleuchtungsvorrichtung (4), mit der eine intensitätsmodulierte Anregungsstrahlung (5) erzeugbar ist, mit einer optischen Einrichtung, mit der die Oberfläche (1) mit der Anregungsstrahlung (5) in einem Prüfbereich (13) beaufschlagbar ist und mit der von einem Meßbereich (14) der Oberfläche (1) abgegebene Wärmestrahlung (16) einem Detektor (20) in einem gegenüber dem direkten Gesichtsfeld des Detektors (20) vergrößerten Winkelbereich (15) zuführbar ist, wobei die optische Einrichtung eine Reflexionsvorrichtung mit einer Reflexionsfläche, mit der die Anregungsstrahlung (5) und die dem Detektor (20) zugeführte Wärmestrahlung (16) koaxial ausrichtbar sind, eine nur von der Anregungsstrahlung (5) beaufschlagte Fokussiervorrichtung und eine zwischen der Oberfläche (1) und dem Detektor (20) angeordnete Abbildungsvorrichtung zum Sammeln der Wärmestrahlung (16) aus dem im Fokalbereich der Abbildungsvorrichtung liegenden Meßbereich (14) der Oberfläche (1) aufweist und die Reflexionsfläche der Reflexionsvorrichtung für eine der Strahlungen (5; 16, 17) über eine optimierte Reflektivität verfügt, **dadurch gekennzeichnet,** daß die Reflexionsfläche (10, 23) der Reflexionsvorrichtung (9, 21) von der anderen Strahlung (16, 17; 5) in einem für diese andere Strahlung (16, 17; 5) im wesentlichen vollständig durchlässigen Bereich nahezu verlustfrei passiert wird, daß die Abbildungsvorrichtung (11) eine Ausnehmung (12) aufweist, durch die die homozentrische Anregungsstrahlung (5) durchtritt, und daß der Fokalbereich der Fokussiervorrichtung (8) zwischen der Oberfläche (1) und der Fokussiervorrichtung (8) liegt, so daß die Anregungsstrahlung (5) divergent auf die Oberfläche (1) auftrifft und der Prüfbereich (13) größer als der Meßbereich (14) der Oberfläche (1) ist.

2. Vorrichtung nach Anspruch 1, dadurch gekennzeichnet, daß der Fokalbereich der Fokussiervorrichtung (8) insbesondere mittig zwischen der Reflexionsvorrichtung (9, 21) und der Abbildungsvorrichtung (11) liegt.

3. Vorrichtung nach Anspruch 1 oder 2, dadurch gekennzeichnet, daß die Reflexionsvorrichtung ein Spiegel (9) ist, dessen Reflexionsfläche (10) von der Anregungsstrahlung (5) beaufschlagt und höchstens so groß wie der durch die Ausnehmung (12) der Abbildungsvorrichtung (11) abgeschattete Bereich der dem Detektor (20) zugeführten Wärmestrahlung (16, 17) ist.

4. Vorrichtung nach Anspruch 1 oder 2, dadurch gekennzeichnet, daß die Reflexionsvorrichtung ein Spiegel (21) ist, dessen Reflexionsfläche (23) von dem im wesentlichen gesamten Anteil der von der Abbildungsvorrichtung (11) erfaßten Wärmestrahlung (16) beaufschlagt ist und im wesentlichen der Oberfläche des Spiegels (21) entspricht, wobei die für den auszunutzenden Spektralbereich der Wärmestrahlung (16, 17) im wesentlichen vollständig reflektive Reflexionsfläche (23) in einem Durchtrittsbereich (22) der Anregungsstrahlung (5) ausgespart ist, der höchstens so groß wie der durch die Ausnehmung (12) der Abbildungsvorrichtung (11) abgeschattete Bereich der dem Detektor zugeführten Wärmestrahlung (16, 17) ist.

5. Vorrichtung nach Anspruch 4, dadurch gekennzeichnet, daß der Durchtrittsbereich der Anregungsstrahlung (5) eine den Spiegel (21) querende Ausnehmung (22) ist.

## Claims

1. A device for photothermically testing a surface (1) of an in particular moving test body (2) comprising an illumination device (4) with which an intensity-modulated excitation radiation (5) can be produced, an optical device with which the surface (1) can be subjected to the effect of the excitation radiation (5) in a test region (13) and with which thermal radiation (16) emitted from a measurement region (14) of the surface (1) can be fed to a detector (20) in an angular region (15) which is increased in comparison with the direct field of view of the detector (20), wherein the optical device has a reflection device with a reflection surface with which the excitation radiation (5) and the thermal radiation (16) fed to the detector (20) can be coaxially aligned, a focusing device which is acted upon only by the excitation radiation (5) and an imaging device arranged between the surface (1) and the detector (20) for convergence of the thermal radiation (16) from the measurement region (14) of the surface (1), which is in the focal range of the imaging device, and the reflection surface of the reflection device has an optimised reflectivity for one of the radiations (5; 16, 17), characterised in that the reflection surface (10, 23) of the reflection device (9, 21) is passed almost without loss by the other radiation (16, 17; 5) in a region which is substantially completely transmissive for that other radiation (16, 17; 5), that the imaging device (11) has an opening (12) through which the homocentric excitation radiation (5) passes, and that the focal range of the focusing device (8) is between the surface (1) and the focusing device (8) so that the excitation radiation (5) divergently impinges on the surface (1) and the test region (13) is larger than the measurement region (14) of the surface (1).

2. A device according to claim 1 characterised in that the focal range of the focusing device (8) is disposed in particular centrally between the reflection device (9, 21) and the imaging device (11).

3. A device according to claim 1 or claim 2 characterised in that the reflection device is a mirror (9) whose reflection surface (10) is acted upon by the excitation radiation (5) and which is at most as large as the region, which is screened by the opening (12) of the imaging device (11), of the thermal radiation (16, 17) which is fed to the detector (20).

4. A device according to claim 1 or claim 2 characterised in that the reflection device is a mirror (21) whose reflection surface (23) is acted upon by substantially the entire proportion of the thermal radiation (16) involved with the imaging device (11) and substantially corresponds to the surface of the mirror (21), wherein the reflection surface (23) which is substantially completely reflective for the spectral range to be used of the thermal radiation (16, 17) is apertured in a transmission region (22) for the excitation radiation (5), which at most is as large as the region, screened by the opening (12) of the imaging device (11), of the thermal radiation (16, 17) which is fed to the detector.

5. A device according to claim 4 characterised in that the transmission region for the excitation radiation (5) is an opening (22) which passes through the mirror (21).

## Revendications

1. Dispositif pour le contrôle photothermique d'une surface (1) d'une éprouvette (2), notamment d'une éprouvette animée d'un mouvement, comportant un dispositif d'éclairage (4) apte à produire un rayonnement d'excitation (5) d'intensité modulée, ainsi qu'un dispositif optique apte à orienter le rayonnement d'excitation (5) sur la surface (1) dans une zone de contrôle (13), et permettant de conduire le rayonnement thermique (16) émis par une zone de mesure (14) de la surface (1) vers un détecteur (20), dans un champ angulaire (15) agrandi par rapport au champ de vision directe dudit détecteur (20), ledit dispositif optique présentant un dispositif de réflexion muni d'une surface de réflexion au moyen de laquelle le rayonnement d'excitation (5) et le rayonnement thermique (16) conduits vers le détecteur (20) peuvent être alignés coaxialement, un dispositif de focalisation recevant le seul rayonnement d'excitation (5), et un dispositif de reproduction, disposé entre la surface (1) et le détecteur (20), destiné à collecter le rayonnement thermique (16) de la plage de mesure (14) de la surface (1), place située dans la zone focale du dispositif de reproduction, la surface de réflexion du dispositif de réflexion disposant d'une réflexivité optimisée pour l'un des rayonnements (5, 16, 17), caractérisé en ce que la face de réflexion (10, 23) du dispositif de réflexion (9, 21) est traversé, pratiquement perte, par l'autre rayonnement (16, 17, 5) dans une zone presque totalement perméable à cette autre rayonnement (16, 17, 5), en ce que le dispositif de reproduction 11 présente une encoche (12) à travers laquelle passe le rayonnement d'excitation (5) homocentrique, et en ce que la zone focale du dispositif de focalisation (8) se situe entre la surface (1) et ledit dispositif de focalisation (8), ce qui a pour effet que le rayonnement d'excitation (5) frappe la surface (1) de manière divergente, et que la zone de contrôle (13) est plus grande que la zone de mesure (14) de la surface (1).

2. Dispositif selon la revendication 1, caractérisé en ce que la zone focale du dispositif de focalisation (8) se situe centralement entre le dispositif de réflexion (9, 21) et le dispositif de reproduction (11).

3. Dispositif selon la revendication 1 ou 2, caractérisé en ce que le dispositif de réflexion est un miroir 9 dont la face de réflexion (10) est frappée par le rayonnement d'excitation (5), ce miroir étant au maximum de la même dimension que la zone abritée par l'encoche (12) du dispositif de reproduction (11) du rayonnement (16, 17) qui conduit vers le détecteur (20).

4. Dispositif selon la revendication 1 ou 2, caractérisé en ce que le dispositif de réflexion est un miroir (21) dont la face réfléchissante (23) est frappée par sensiblement la totalité de la partie du rayonnement thermique (16) saisie par le dispositif de reproduction (11) et correspond sensiblement à la surface du miroir (21), tandis que la face de réflexion (23), pratiquement entièrement réfléchissante pour la zone spectrale exploitable du rayonnement thermique (16, 17), est ménagée dans une zone de pénétration (22) du rayonnement d'excitation (5), cette zone de pénétration étant au maximum de la même dimension que la zone abritée, par l'encoche (12) du dispositif de reproduction (11), du rayonnement thermique (16, 17) conduit vers le détecteur.

5. Dispositif selon la revendication 4, caractérisé en ce que la zone de pénétration du rayonnement d'excitation (5) est une encoche (22) transversale au miroir (21).
